Europäisches Patentamt

European Patent Office

Office européen des brevets

(11) Veröffentlichungsnummer: **0 095 073**

**A1**

## (12) EUROPÄISCHE PATENTANMELDUNG

(21) Anmeldenummer: 83104430.0

(22) Anmeldetag: 05.05.83

(51) Int. Cl.³: **H 02 P 7/62**
**H 02 P 7/28**

(30) Priorität: 25.05.82 DE 3219476

(43) Veröffentlichungstag der Anmeldung:
30.11.83 Patentblatt 83/48

(84) Benannte Vertragsstaaten:
NL

(71) Anmelder: Marquardt GmbH
Schlossstrasse 16
D-7201 Rietheim-Weilheim 1(DE)

(72) Erfinder: Elsässer, Heinz
Lerchenstrasse 7
D-7201 Rietheim-Weilheim 1(DE)

(74) Vertreter: Schmid, Berthold et al,
Patentanwälte Dipl.-Ing. B. Schmid Dr. Ing. G. Birn
Falbenhennenstrasse 17
D-7000 Stuttgart 1(DE)

(54) Regelbare Phasenanschnittsschaltung für Elektromotoren.

(57) Die Erfindung bezieht sich auf eine regelbare Phasenan-schnittschaltung für Elektromotore, mit einem mit dem Motor hintereinandergeschalteten Halbleiterschaltelement, insbesondere Triac (T), wobei parallel zum Halbleiterschalt-element ein RC-Glied (4) mit Potentiometer (P) und Vorwider-stand (V) angeordnet ist, und zwischen dem Verbindungs-punkt (5) des Kondensators (C) mit dem Widerstand (P) und der Steuerelektrode (6) des Halbleiterschaltelements ein Zündglied, insbesondere ein Diac (D), vorgesehen ist. Um eine stabilere Drehzahl bei Belastung insbesondere im unteren Drehzahlbereich zu erhalten, ist ein Widerstand (R), dessen Widerstand gleich oder kleiner als der des Potentio-meters (P) und des Vorwiderstandes (V) ist, vom Verbindungspunkt (5) des RC-Glieds (4) aus parallel zum Motor (M, Fl, F2) geschaltet.

EP 0 095 073 A1

Firma

Marquardt GmbH

Schloßstraße 16


7201 Rietheim-Weilheim 1


Regelbare Phasenanschnittsschaltung für Elektromotoren.


Die Erfindung bezieht sich auf eine regelbare Phasenanschnittsschaltung für Elektromotore, mit einem mit dem Motor hintereinandergeschalteten Halbleiterschaltelement, insbesondere Triac,
wobei parallel zum Halbleiterschaltelement ein RC-Glied mit
Potentiometer angeordnet ist, und zwischen dem Verbindungspunkt
des Kondensators mit dem Widerstand und der Steuerelektrode des
Halbleiterschaltelements ein Zündglied, insbesondere ein Diac,
vorgesehen ist.

Die bekannten Schaltungen dieser Art haben den Nachteil, daß bei geringen Drehzahlen des Motors die Drehzahl bei Belastung stark absinkt. Die Aufgabe der vorliegenden Erfindung ist es, diesen Nachteil zu beseitigen. Dies wird erfindungsgemäß dadurch erreicht, daß ein Widerstand, dessen Widerstandswert gleich oder kleiner als der des Potentiometers und seines Vorwiderstandes ist, vom Verbindungspunkt des PC-Glieds aus parallel zum Motor geschaltet ist. Hierdurch wird ein relativ stabiles Drehzahlverhalten über den gesamten Drehzahlbereich auch bei Belastung erzielt. Vorzugsweise ist der parallel zum Motor geschaltete Widerstand regelbar. Der günstigste Widerstandswert des Widerstandes liegt zwischen 0,5 bis 1,0 des Wertes des Potentiometers und seines Vorwiderstandes.

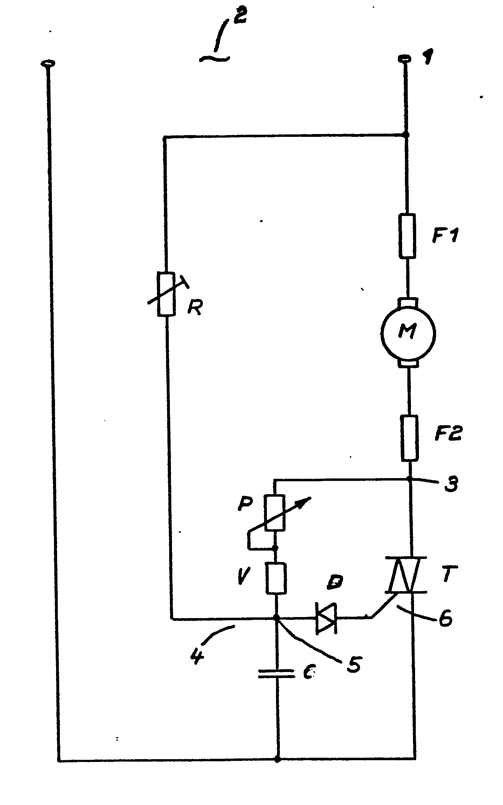

Die Zeichnung zeigt ein Ausführungsbeispiel der Erfindung in schematischer Darstellung.

Die Anschlußklemme 1 des Universalmotors M mit seinen beiden Feldspulen F1 und F2 ist unmittelbar mit der Wechselstromquelle 2 verbunden. Die andere Klemme der Wechselstromquelle 2 ist durch Hintereinanderschaltung mit einem Triac T mit der anderen Motorklemme 3 verbunden. Parallel zum Triac T ist ein RC-Glied 4 geschaltet, welches aus dem Kondensator C, einem Vorwiderstand V und einem Potentiometer P besteht. Am Verbindungspunkt 5 zwischen dem Vorwiderstand V und dem Kondensator C ist ein Diac D angeschlossen, welches andererseits mit der Steuerelektrode 6 des Triacs T verbunden ist. Vom Verbindungspunkt 5 des

RC-Glieds 4 ist parallel zum Motor M mit seinen beiden Feldspulen F1 und F2 ein regelbarer Widerstand R geschaltet. Dabei
gilt, daß R gleich oder kleiner als die Summe von P und V ist.
Durch diesen parallelgeschalteten Widerstand wird ein Absinken
der Drehzahl bei Belastung, insbesondere bei geringen Drehzahlen, weitgehend verhindert.

- 1 -

14 560

<u>A n s p r ü c h e</u>

1. Regelbare Phasenanschnittschaltung für Elektromotore, mit einem mit dem Motor hintereinandergeschalteten Halbleiterschaltelement, insbesondere Triac, wobei parallel zum Halbleiterschaltelement ein RC-Glied mit Potentiometer und Vorwiderstand angeordnet ist, und zwischen dem Verbindungspunkt des Kondensators mit dem Widerstand und der Steuerelektrode des Halbleiterschaltelements ein Zündglied, insbesondere ein Diac, vorgesehen ist, dadurch gekennzeichnet, daß ein Widerstand (R), dessen Widerstand gleich oder kleiner als der des Potentiometers (P) und seines Vorwiderstandes (V) ist, vom Verbindungspunkt (5) des RC-Glieds (4) aus parallel zum Motor (M, F1, F2) geschaltet ist.

2. Schaltung nach Anspruch 1, dadurch gekennzeichnet, daß der Widerstand (R) regelbar ist.

3. Schaltung nach Anspruch 1 oder 2, dadurch gekennzeichnet, daß der Widerstandswert des Widerstandes (R) zwischen 0,5 bis 1,0 des Wertes des Potentiometers (P) und des Vorwiderstandes (V) liegt.

0095073

Europäisches Patentamt

**0095073**
Nummer der Anmeldung

# EUROPÄISCHER RECHERCHENBERICHT

EP 83 10 4430

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | GB-A-1 170 015 (MEFINA S.A.) * Figur * | 1 | H 02 P 7/62 H 02 P 7/28 |
| A | DE-A-2 154 454 (STANDARD ELEKTRIK LORENZ AG) * Seite 3, Zeile 15 - Seite 4, Zeile 8; Figuren 1, 2 * | 1 | |
| A | DE-A-2 253 658 (LICENTIA PATENT-VERWALTUNGS-GMBH) * Anspruch 1; Figur * | 1 | |
| A | Patent Abstracts of Japan Band 3, Nr. 18, 16. Februar 1979 Seite 91E91 & JP-A-53-147222 | 1 | |

RECHERCHIERTE SACHGEBIETE (Int. Cl. 3)

H 02 P 7/00

Der vorliegende Recherchenbericht wurde für alle Patentansprüche erstellt.

| Recherchenort BERLIN | Abschlußdatum der Recherche 18-08-1983 | Prüfer FAORO G |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82